# EUROPÄISCHE PATENTSCHRIFT

(11) **EP 2 457 042 B1**
(45) Veröffentlichungstag und Bekanntmachung des Hinweises auf die Patenterteilung: **17.04.2019**
(21) Anmeldenummer: 10732701.7
(22) Anmeldetag: 13.07.2010
(51) Int. Cl.: F25D 25/02

(54) **HAUSHALTSKÄLTEGERÄT MIT ZWISCHENBODEN, ZWISCHENBODEN UND VERFAHREN ZUR HERSTELLUNG EINES ZWISCHENBODENS**
DOMESTIC REFRIGERATION APPLIANCE WITH A SHELF, SHELF AND METHOD FOR PRODUCING A SHELF
APPAREIL FRIGORIFIQUE DOMESTIQUE COMPRENANT UNE CLAYETTE, CLAYETTE ET PROCÉDÉ DE FABRICATION D'UNE CLAYETTE

(30) Priorität: 21.07.2009 DE 102009027886
(43) Veröffentlichungstag der Anmeldung: 30.05.2012
(73) Patentinhaber: BSH Hausgeräte GmbH, 81739 München (DE)
(72) Erfinder: PFISTER, Bernd, 89079 Ulm (DE)
(86) Internationale Anmeldenummer: PCT/EP2010/060062
(87) Internationale Veröffentlichungsnummer: WO 2011/009770

(56) Entgegenhaltungen:
- EP-A2- 1 271 078
- US-A- 6 045 101

## Beschreibung

Die Erfindung betrifft ein Haushaltskältegerät, insbesondere einen Kühlschrank oder einen Tiefkühlschrank, mit einer Tür, über die ein Innenraum zugänglich ist, in den zumindest ein Zwischenboden zur Ablage von Kühlgut eingesetzt ist. Außerdem betrifft die Erfindung einen Zwischenboden sowie ein Verfahren zur Herstellung eines Zwischenbodens.

Kühlschränke weisen üblicherweise Zwischenböden auf, die an den Seitenwänden des Innenraums gehaltert sind und als Abstellfläche für Kühlgut dienen. Die Zwischenböden sind meistens verstellbar, können also an verschiedenen Positionen in den Innenraum des Kühlschranks eingesetzt werden. Die Zwischenböden bestehen üblicherweise im Wesentlichen aus einer Glasplatte.

Um die Glasplatte besser greifen zu können, und um Beschädigungen des Kühlschrankinnenraums beim Versetzen der Glasplatten zu vermeiden, sind die Kanten der Glasplatten mit einer Kunststofffassung versehen. Diese Kunststofffassungen sind derzeit in zwei Varianten erhältlich: Bei der ersten Variante weist jede Glasplatte einen umspritzten Kunststoffrahmen auf. Die Glasplatte ist also an allen vier Kanten mit Kunststoff umspritzt. Bei einer zweiten Variante sind auf die Kanten auf der Vorder- und Rückseite jeweils eine Leiste aufgesteckt. Derartige Leisten sind z. B. extrudiert oder sind Spritzgussteile.

Das Aufstecken von vorgefertigten Leisten hat jedoch den Nachteil, dass diese nicht gut an der Glasplatte halten. Bei einigen Geräten wird daher im hinteren Bereich der Glasplatte eine Nut eingeschliffen, sodass die hintere Leiste in dieser Nut fixiert wird. Bei anderen Geräten sind die Leisten festgeklebt. Es muss also jeweils ein zusätzlicher Arbeitsschritt für die Montage und das Fixieren der Leisten durchgeführt werden.

Die Offenlegungsschrift EP 1 271 078 A2 zeigt einen Kühlschrank mit einem Fachboden umfassend eine Glasplatte. Die Glasplatte weist zwei U-förmige Leisten auf, welche an einer Vorder- und einer Rückkante aufgebracht sind. Aufgrund der U-Form umfassen die Leisten jeweils Teile der Seitenkanten der Glasplatte.

Die Erfindung hat sich daher die Aufgabe gestellt, ein Haushaltskältegerät bzw. einen Zwischenboden für ein Haushaltskältegerät bereitzustellen, der mit formschönen und gut fixierten Abschlussleisten versehen ist, und der darüber hinaus einfach herzustellen ist.

Die Erfindung löst diese Aufgabe mit dem Haushaltskältegerät gemäß Anspruch 1, dem Zwischenboden gemäß Anspruch 9 und dem Verfahren zur Herstellung eines Zwischenbodens gemäß Anspruch 10.

Der erfindungsgemäße Zwischenboden ist aus einer Glasplatte gefertigt, wobei an eine oder mehrere seitliche Randbereiche der Glasplatte jeweils eine einzelne Kunststoffleiste angespritzt ist. Die Glasplatte ist somit nicht vollständig mit einem Kunststoffrahmen umspritzt, sondern an einer oder mehreren Seiten mit jeweils einer einzelnen Kunststoffleiste versehen.

Mit seitlichem Randbereich ist ein Bereich gemeint, der sich am Rand der Glasplatte befindet. Vorzugsweise erstreckt sich ein seitlicher Randbereich über zumindest einen Teil einer seitlichen Schmalseite der Glasplatte. Mit "seitliche Schmalseite" ist eine der umgangssprachlich auch mit "Kante" bezeichneten Seitenflächen gemeint, von denen eine rechteckige Glasplatte vier besitzt. Darüber hinaus hat eine Glasplatte auch eine Ober- und eine Unterseite. An jede der seitlichen Schmalseiten einer Glasplatte ist bevorzugt nur eine einzige Kunststoffleiste angespritzt. Ein seitlicher Randbereich kann sich auch über einen Randstreifen der Ober- und/oder Unterseite der Glasplatte erstrecken.

Anspritzen bedeutet, dass die Kunststoffleiste durch einen Spritzgussvorgang hergestellt wird, bei welchem der jeweilige Randbereich der Glasplatte in eine Spritzgießform eingelegt wird. In die Form wird dann auf bekannte Weise flüssiges Kunststoffmaterial eingespritzt, welches die Form ausfüllt und dabei den Randbereich umfließt. Nach dem Auskühlen des Kunststoffmaterials sitzt die Kunststoffleiste unter Vorspannung an dem jeweiligen Randbereich fest. Dies entsteht dadurch, dass sich der Kunststoff beim Erstarren bzw. Erkalten leicht zusammenzieht. Das Glas dagegen schwindet nach dem Spritzgießen nur wenig, wodurch eine Spannung zwischen Glas und Kunststoff möglich ist, die die Kunststoffleiste am seitlichen Randbereich der Glasplatte hält. Dadurch "krallt" sich die Kunststoffleiste sozusagen an dem Randbereich fest. Weist die Kunststoffleiste z. B. zwei Schenkel auf, von denen der eine die Glasplatte ausgehend von der seitlichen Schmalseite auf der Oberseite und der andere auf der Unterseite umgreift, so entsteht beispielsweise zwischen diesen beiden Schenkeln eine Vorspannung bzw. Klemmkraft in Richtung der Glasplatte.

Weiterhin trägt zur guten Haftung die Tatsache bei, dass der flüssige Kunststoff sich während des Spritzgießens genau an die Kontur der Glasplatte in dem jeweiligen seitlichen Randbereich anpasst. Dies gilt insbesondere dann, wenn die Kanten der Glasplatte ungeschliffen sind. Auch geschliffenes Glas hat jedoch eine gewisse Topographie, die eine Art formschlüssiger Verbindung zu dem Kunststoff erlaubt. Dadurch kann eine erheblich bessere Haftung erreicht werden, als bei dem Aufstecken einer vorgefertigten Leiste, die nicht exakt an die Kontur dieses bestimmten seitlichen Randbereichs angepasst ist. Eine hundertprozentige Abbildung der Kontur der Glasplatte lässt sich nur erreichen, wenn der jeweilige Randbereich der Glasplatte mit in die Spritzgießform eingelegt wird.

Die Erfindung hat den Vorteil, dass kein Aufkleben oder Aufstecken von getrennt gefertigten Leisten erforderlich ist. Durch das Anspritzen haftet der Kunststoff sehr gut an der Glasplatte, sodass die eingeschliffene Nut in der Glasplatte nicht mehr erforderlich ist. Ferner wird auch das Herstellungsverfahren vereinfacht, da die Leisten im Spritzgussprozess direkt angespritzt werden. Erfindungsgemäß kann an einen, zwei, drei oder allen Randbereichen der Glasplatte jeweils eine Kunststoffleiste angespritzt sein. Auch wenn Randbereiche an zwei benachbarten Schmalseiten der Glasplatte erfindungsgemäß mit jeweils einer Kunststoffleiste versehen sind, entsteht jedoch kein durchgehender Rahmen, sondern jede Kunststoffleiste hat vorzugsweise maximal die Länge der Schmalseite, an die sie angespritzt ist. Die Glasplatte ist bevorzugt rechteckig, auch vieleckige oder abgerundete Formen sind jedoch von der Erfindung abgedeckt.

Das Haushaltsgerät ist ein Kältegerät, insbesondere ein Kühlschrank oder ein Tiefkühlgerät. Die Glasplatte ist bevorzugt aus geeignetem bruchsicherem Glas gefertigt.

Vorzugsweise ist an den der Tür des Haushaltskältegeräts zugewandten Randbereich der Glasplatte eine Kunststoffleiste angespritzt. Diese Leiste ist dem Benutzer zugewandt und weist daher vorzugsweise eine ästhetische Optik auf. Beispielsweise ist sie aus einem Kunststoffmaterial mit Metall-Optik gefertigt und sieht dadurch z. B. aus wie in Silber lackiert.

Ferner ist bevorzugt an den von der Tür abgewandten rückwärtigen Randbereich der Glasplatte eine Kunststoffleiste angespritzt. Diese Leiste kann z. B. dazu dienen, den Zwischenboden an der vorgesehenen Position im Haushaltsgerät zu halten. Für diesen Zweck kann sie eine bestimmte Ausformung aufweisen, die formschlüssig in eine entsprechende Form im Kältegerät z. B. an dessen Rückwand eingreift. Besonders bevorzugt sind sowohl an den der Tür zugewandten Randbereich als auch an den von der Tür abgewandte Randbereich jeweils eine Kunststoffleiste angespritzt, während die den Seitenwänden zugewandten Randbereiche frei bleiben. Diese Konfiguration hat den weiteren Vorteil, dass die Kanten der Glasplatte nicht mehr umlaufend an allen vier Seiten geschliffen werden müssen, sondern nur noch an den zwei Schmalseiten, die nicht umspritzt werden. An diesen beiden Schmalseiten ist der Zwischenboden vorzugsweise an den beiden Seitenwänden des Innenraums gehaltert, z. B. in entsprechende Schienen eingeschoben oder auf geeignete Vorsprünge in den Seitenwänden aufgesetzt.

Vorzugsweise umgreift jede Kunststoffleiste den Randbereich, an den sie angespritzt ist, jeweils um 5 - 20 mm, vorzugsweise 10 - 15 mm. In anderen Worten bedeckt die Kunststoffleiste die Schmalseite der Glasplatte in dem Randbereich und dazu etwa 5 - 20 mm der Ober- und Unterseite der Glasplatte in dem Randbereich, der sich an die Schmalseite anschließt. Durch diese Ausgestaltung ist die Klemmkraft ausreichend groß, sodass die Leisten jeweils gegen Ablösen/Abziehen gesichert sind. Darüber hinaus hält die hintere Leiste die Glasplatte fest an der vorgesehenen Position im Kältegerät. Daher übergreift die Kunststoffleiste an dem der Rückwand zugewandten Randbereich die Glasplatte bevorzugt um ca. 15 ± 2 mm. Bei dem der Tür zugewandten Randbereich ist eine Übergreifung von ca. 10 ± 2 mm ausreichend, da diese Leiste lediglich der Optik dient und somit nur gegen Abziehen gesichert sein muss. Diese Werte gelten insbesondere bei der Verwendung von Acrylnitril-Butadien-Styrol (ABS) für die Herstellung der Kunststoffleiste.

Bei der Verwendung von anderen Kunststoffmaterialien können, je nach Haftung des Materials auf Glas, entsprechend angepasste Werte für die Übergreifung gelten. Besonders bevorzugt ist die Kunststoffleiste jedoch aus ABS.

Vorzugsweise erstreckt sich die zumindest eine Kunststoffleiste bzw. der entsprechende Randbereich über zumindest einen Großteil der Länge einer Schmalseite der Glasplatte. Sie muss nicht die gesamte Länge der Schmalseite abdecken, denkbar sind auch Gestaltungen, in denen lediglich die mittleren 80 - 90 % der jeweiligen Schmalseite von der angespritzten Kunststoffleiste überdeckt sind. Besonders bevorzugt hat jede Kunststoffleiste jedoch im Wesentlichen die gleiche Länge wie die Schmalseite, an der der Randbereich liegt. Um Toleranzen in der Fertigung der Glasplatte abzufedern, ist die Kunststoffleiste erfindungsgemäß ca. 0,2 - 2 mm, bevorzugt ca. 1 mm kürzer als die Schmalseite, an die sie angespritzt ist. Auf diese Weise wird vermieden, dass es bei einer im unteren Toleranzbereich befindlichen Glasplatte zu seitlichem Austritt von Kunststoff aus der Spritzgießform während des Anspritzens kommt.

Die Erfindung ist auch auf einen Zwischenboden für ein Kältegerät geeignet, welcher wie oben beschrieben ausgestaltet ist.

Ferner ist die Erfindung auch auf ein Verfahren zur Herstellung eines Zwischenbodens für ein Kältegerät gerichtet. Bei diesem Verfahren wird zunächst eine Glasplatte bereitgestellt, daraufhin wird die Glasplatte in eine Spritzgießform eingesetzt, und an zumindest einen Randbereich der Glasplatte wird eine Kunststoffleiste angespritzt. Besonders bevorzugt wird an zwei gegenüberliegende Randbereiche der Glasplatte jeweils eine Kunststoffleiste angespritzt. Dabei handelt es sich bevorzugt um die im fertigen Gerät der Tür zugewandten und abgewandten Randbereiche der Glasplatte.

Die Glasplatte ist bevorzugt zunächst ungeschliffen. Vor dem Einsetzen der Glasplatte in eine Spritzgießform wird jedoch bevorzugt zumindest eine Schmalseite der Glasplatte geschliffen.

Vorzugsweise werden lediglich die Schmalseiten bzw. die Randbereiche geschliffen, an die keine Kunststoffleiste angespritzt wird/werden. Da die Randbereiche, an die die Kunststoffleisten angespritzt werden, in der weiteren Montage und vom Benutzer nicht berührt werden können, brauchen diese nicht abgeschliffen werden.

Die Erfindung wird nun anhand von Ausführungsbeispielen mit Bezug auf die beiliegenden Zeichnungen näher beschrieben. In den Zeichnungen zeigen:
- Figur 1: eine Draufsicht auf einen Zwischenboden gemäß Stand der Technik;
- Figur 2: einen Querschnitt durch einen Zwischenboden gemäß Stand der Technik;
- Figur 3: eine perspektivische Draufsicht auf einen Zwischenboden gemäß einem Ausführungsbeispiel der Erfindung;
- Figur 4: eine perspektivische Seitenansicht auf die hintere Kante mit angespritzter Kunststoffleiste des Zwischenbodens der Figur 3;
- Figur 5: einen Querschnitt durch die vordere Kunststoffleiste des Zwischenbodens der Figur 3;
- Figur 6: eine perspektivische Ansicht eines Teils des Zwischenbodens mit vorderer Kunststoffleiste der Figur 3;
- Figur 7: eine schematische perspektivische Ansicht eines Kältegeräts.

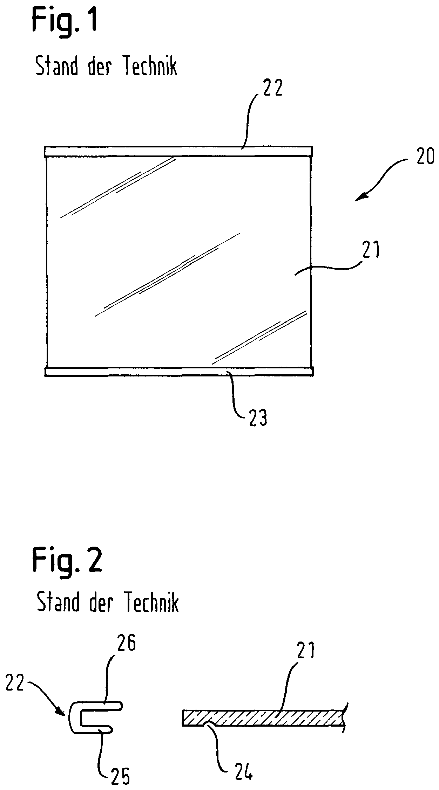

Figur 1 zeigt eine Draufsicht auf einen Zwischenboden 20 für ein Kältegerät. Dieser besteht aus einer rechteckigen Glasplatte 21 mit aufgesteckten sogenannten Abschlussleisten 22, 23 hinten und vorne. Die vordere Abschlussleiste 23 ist der Tür des Kältegeräts zugewandt und daher optisch ansprechend ausgestaltet. Die Abschlussleiste 23 ist z. B. ein extrudiertes Profilstück mit einer metallisierten (lackierten) Oberfläche.

Die hintere Abschlussleiste 22 ist z. B. ein gespritztes Profil in weiß, welches auf die hintere Kante bzw. Schmalseite aufgesteckt wird. Zur besseren Fixierung der hinteren Abschlussleiste 22 ist parallel zur hinteren Schmalseite in die Glasplatte 21 eine Nut 24 eingeschliffen, wie in der Querschnittzeichnung der Figur 2 zu erkennen. Diese zeigt eine hintere Abschlussleiste 22 sowie den hinteren Abschnitt der Glasplatte 21 im Querschnitt, bevor die Leiste 22 aufgesteckt wird. Die Leiste 22 ist im Querschnitt U-förmig, und die Länge der Schenkel 25, 26 ist so ausgelegt, dass das Ende des Schenkels 25 in die Nut 24 einrastet und durch die Klemmkraft der beiden Schenkel gegeneinander dort gehalten wird. Mit dieser Art von Befestigung können jedoch nur relativ geringen Abziehkräften standgehalten werden, weswegen insbesondere die hintere Abschlussleiste 22 oft zusätzlich geklebt wird.

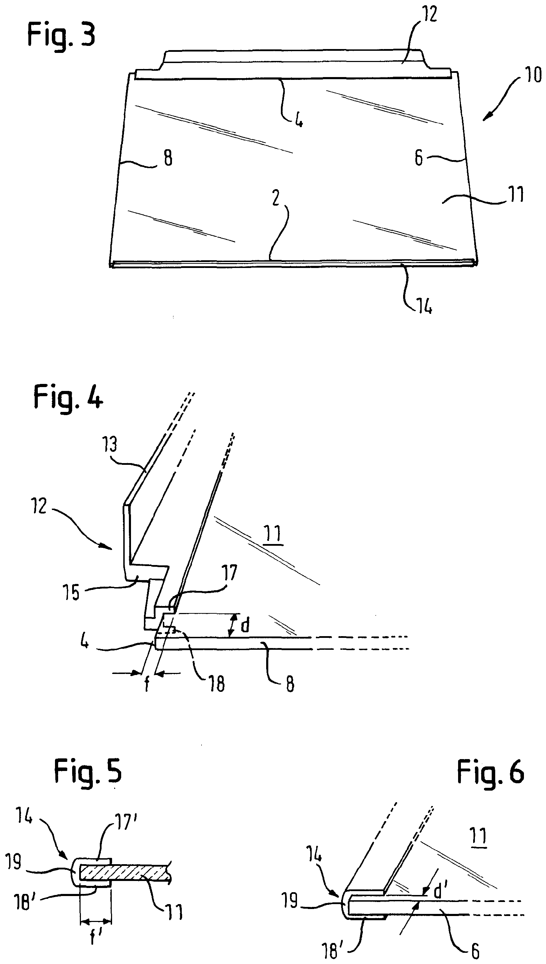

Figur 3 zeigt eine perspektivische Draufsicht auf einen Zwischenboden 10 gemäß einem Ausführungsbeispiel der Erfindung. Auch dieser Zwischenboden 10 weist eine rechteckige Glasplatte 11 auf. An deren vorderen Randbereich 2 ist eine Kunststoffleiste 14 angespritzt, die im Gebrauch der Tür des Kältegeräts zugewandt ist. An den hinteren Randbereich 4 ist eine zweite Kunststoffleiste 12 angespritzt. Die beiden seitlichen Randbereiche 6 und 8 sind nicht in Kunststoff eingefasst. Stattdessen sind sie durch Abschleifen zur Handhabung durch den Benutzer geeignet, und können auf entsprechende Schienen in den Seitenwänden des Innenraums des Kältegeräts eingeschoben werden. Aus Figur 3 ist bereits erkennbar, dass die Kunststoffleisten 12, 14 sich fast über die gesamte Länge der jeweiligen Schmalseite der Glasplatte bis wenige Millimeter von der Ecke entfernt erstrecken.

Figur 4 zeigt die Ecke zwischen den beiden Randbereichen 4 und 8 der Glasplatte 11 im Detail. Insbesondere ist darin der Aufbau der Kunststoffleiste 12 näher erkennbar. Diese weist einen Hauptabschnitt 15 auf, der mit den beiden Schenkeln 17 und 18 den Randbereich 4 umgreift. Die Länge f der Schenkel 17, 18 beträgt beispielsweise ca. 15 mm.

Eine eingeschliffene Nut ist dagegen nicht vorhanden und auch nicht notwendig, da bei einer Übergreifung f von ca. 15 mm die Vorspannung ausreichend groß ist, um ein Abziehen der hinteren Kunststoffleiste 12 zu verhindern, sodass diese die Glasplatte fest an der vorgesehenen Position im Kältegerät halten kann.

Ein nach oben abstehender Flügel 13 verhindert, dass Kühlgut von der Glasplatte 11 nach hinten abrutschen kann.

Die Kunststoffleiste 12 reicht nicht ganz bis zur Ecke zwischen den Schmalseiten der Glasplatte, sondern hält einen Abstand d von der Ecke ein. Dieser ist im gezeigten Beispiel ca. 3 - 6 mm groß, kann jedoch auch größer oder kleiner sein. Es empfiehlt sich, zumindest einen Abstand zu wählen, der gleichgroß oder größer ist als die Fertigungstoleranz der Glasplatte 11 in dieser Richtung. Erfindungsgemäß ist die Kunststoffleiste ca. 0,2 bis 2 mm kürzer als der Randbereich, an den sie angespritzt ist. Dadurch wird sichergestellt, dass das Spritzwerkzeug, welches zum Anspritzen der Kunststoffleiste 12 verwendet wird, in jedem Fall durch die Glasplatte 11 vollkommen verschlossen wird, sodass Kunststoffmasse während des Anspritzens nicht austreten kann.

Die Kunststoffleiste 12 kann weiß oder farbig gestaltet sein, oder vorzugsweise in Metall-Optik, z. B. Silber oder Edelstahlfarben. Dies gilt auch für die vordere Kunststoffleiste 14, welche mit Bezug auf die Figuren 5 und 6 näher beschrieben wird.

Figur 5 zeigt den vorderen Teil der Glasplatte 11 im Querschnitt. Die Kunststoffleiste 14 ist einfacher gestaltet als die Leiste 12, da sie im Wesentlichen nur der Ästhetik dient. Sie weist ein etwa U-förmiges Profil auf, wobei die beiden Schenkel 17' und 18' die Glasplatte 11 umgreifen. Die Länge der Übergreifung f' beträgt hier ca. 10 mm. Damit ist die Klemmkraft ausreichend groß, sodass die vordere Kunststoffleiste 14 gegen Ablösen/Abziehen gesichert ist.

Der die beiden Schenkel 17', 18' verbindende Schenkel 19 ist mit seiner Außenfläche direkt dem Benutzer des Kältegeräts zugewandt. Daher wird bevorzugt ein ansprechender Kunststoff in Silber- oder Edelstahloptik beim Anspritzen der Kunststoffleiste 14 verwendet.

Figur 6 zeigt die Ecke zwischen den Randbereichen 2 und 6 der Glasplatte 11 im Detail. Aus der Darstellung wird deutlich, dass auch die Kunststoffleiste 14 nicht direkt bis zur Ecke reicht, sondern einen Abstand d' von ca. 1 mm einhält. Dieser Millimeter entspricht etwa der Fertigungstoleranz der Glasplatte 11 in diese Richtung und dient dem oben genannten Zweck, den seitlichen Austritt von Kunststoff während des Anspritzens zu vermeiden. Auch am Randbereich 2 ist die Glasplatte 11 nicht mit einer eingeschliffenen Nut versehen, da die Haltekraft der angespritzten Kunststoffleiste 14 ausreichend groß ist.

Auch wenn nur ein Ausführungsbeispiel dargestellt wurde, bei dem sowohl an den vorderen Randbereich 2 als auch an den hinteren Randbereich 4 jeweils eine Kunststoffleiste angespritzt wurde, sind selbstverständlich auch Ausführungsbeispiele von der Erfindung umfasst, bei denen nur an einen Randbereich der Glasplatte 11 eine Kunststoffleiste angespritzt wurde, oder an zwei über Eck liegende Randbereiche, oder auch an jeden Randbereich jeweils eine Kunststoffleiste.

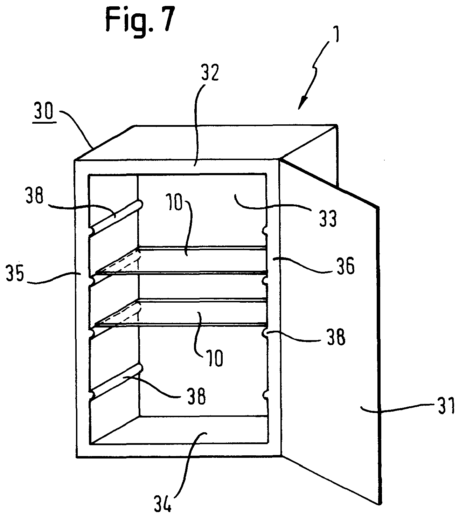

Figur 7 zeigt schematisch ein Haushalts-Kältegerät, nämlich einen Kühlschrank 1, in den zwei erfindungsgemäße Zwischenböden 10 eingesetzt sind. Der Kühlschrank 1 weist einen Korpus 30 auf, mit einer oberen Wand 32, einer Bodenwand 34, einer Rückwand 33 sowie Seitenwänden 35, 36. Die in der Zeichnung nach vorne gewandte Seite des Kühlschranks ist durch eine Tür 31 verschließbar.

Die Wände 32, 33, 34, 35, 36 umschließen einen Innenraum, welcher zur Lagerung von Kühlgut geeignet ist. Um weitere Ablageflächen für Kühlgut bereitzustellen, sind in den Innenraum die Zwischenböden 10 eingezogen, welche wie oben beschrieben ausgestaltet sind. Hierzu sind in den Seitenwänden 35, 36 entsprechende Vorsprünge bzw. Schienen 38 vorgesehen, auf die die Zwischenböden 10 aufgelegt werden können.

Durch die Erfindung wird der Herstellungsprozess derartiger Zwischenböden 10 erheblich erleichtert, da die Kunststoffleisten 12, 14 im Spritzprozess direkt angespritzt werden. Darüber hinaus sind durch entsprechend ausgestaltete Spritzwerkzeuge besonders ansprechende Kunststoffleisten 12, 14 günstig herstellbar.

### BEZUGSZEICHENLISTE

- 1: Kältegerät
- 2: vorderer Randbereich bzw. Schmalseite der Glasplatte
- 4: hinterer Randbereich bzw. Schmalseite der Glasplatte
- 6, 8: seitliche Randbereiche bzw. Schmalseiten der Glasplatte
- 10: Zwischenboden
- 11: Glasplatte
- 12: hintere Kunststoffleiste
- 13: Flügel der Leiste 12
- 14: vordere Kunststoffleiste
- 15: Hauptflügel der Leiste 12
- 17, 18, 19: Schenkel der Kunststoffleisten 12, 14
- 20: Zwischenboden gemäß Stand der Technik
- 21: Glasplatte gemäß Stand der Technik
- 22, 23: aufsteckbare Abschlussleisten gemäß Stand der Technik
- 24: eingeschliffene Glas-Nut
- 25, 26: Schenkel der Abschlussleiste 22
- 30: Korpus des Kühlschranks
- 31: Tür des Kühlschranks 1
- 32: obere Wand des Korpus
- 33: Rückwand des Korpus
- 34: Bodenwand des Korpus
- 35, 36: Seitenwände des Korpus
- 38: Halterungsschiene

## Patentansprüche

1. Haushaltskältegerät (1) mit einer Tür, über die ein Innenraum zugänglich ist, in den zumindest ein Zwischenboden (10) zur Ablage von Kühlgut eingesetzt ist, wobei der Zwischenboden (10) aus einer Glasplatte (11) gefertigt ist, wobei an einen oder mehrere seitliche Randbereiche (2, 4, 6, 8) der Glasplatte (11) jeweils eine einzelne Kunststoffleiste (12, 14) derart angespritzt ist, dass sie unter Vorspannung an dem jeweiligen Randbereich (2, 4, 6, 8) festsitzt, **dadurch gekennzeichnet, dass** die zumindest eine Kunststoffleiste (12, 14) ca. 0,2 bis 2 mm kürzer ist als der Randbereich (2, 4), an den sie angespritzt ist.

2. Haushaltskältegerät (1) nach Anspruch 1, **dadurch gekennzeichnet, dass** an die Glasplatte (11) an dem der Tür zugewandten Randbereich (2) eine Kunststoffleiste (14) angespritzt ist.

3. Haushaltskältegerät (1) nach Anspruch 1 oder 2, **dadurch gekennzeichnet, dass** an die Glasplatte (11) an dem von der Tür abgewandten rückwärtigem Randbereich (4) eine Kunststoffleiste (12) angespritzt ist.

4. Haushaltskältegerät (1) nach einem der vorhergehenden Ansprüche, **dadurch gekennzeichnet, dass** der Zwischenboden (10) an zwei Seitenwänden (35, 36) des Innenraums gehaltert ist.

5. Haushaltskältegerät (1) nach einem der Ansprüche 2 bis 4, **dadurch gekennzeichnet, dass** an den von der Tür abgewandten Randbereich (4) und an den der Tür zugewandten Randbereich (2) der Glasplatte (11) jeweils eine Kunststoffleiste (12, 14) angespritzt ist, und dass die den Seitenwänden (35, 36) zugewandten Randbereiche (6, 8) der Glasplatte (11) frei von Kunststoffleisten sind.

6. Haushaltskältegerät (1) nach einem der vorhergehenden Ansprüche, **dadurch gekennzeichnet, dass** die zumindest eine Kunststoffleiste (12, 14) den Randbereich, an den sie angespritzt ist, um ca. 5 bis 20 mm, vorzugsweise 10 bis 15 mm, übergreift.

7. Haushaltskältegerät (1) nach einem der vorhergehenden Ansprüche, **dadurch gekennzeichnet, dass** die zumindest eine Kunststoffleiste (12, 14) aus Acrylnitril-Butadien-Styrol ist.

8. Haushaltskältegerät (1) nach einem der vorhergehenden Ansprüche, **dadurch gekennzeichnet, dass** die bzw. zumindest eine der Kunststoffleisten (12, 14) aus einen Kunststoffmaterial mit Metall-Optik besteht.

9. Zwischenboden (10) für ein Haushaltskältegerät, der aus einer Glasplatte (11) gefertigt ist, wobei an einen oder mehrere Randbereiche (2, 4) der Glasplatte (11) jeweils eine einzelne Kunststoffleiste (12, 14) derart angespritzt ist, dass sie unter Vorspannung an dem jeweiligen Randbereich (2, 4, 6, 8) festsitzt, **dadurch gekennzeichnet, dass** die zumindest eine Kunststoffleiste (12, 14) ca. 0,2 bis 2 mm kürzer ist als der Randbereich (2, 4), an den sie angespritzt ist.

10. Verfahren zur Herstellung eines Zwischenbodens (10) für ein Haushaltskältegerät (1), umfassend die folgenden Schritte:
a) Bereitstellen einer Glasplatte (11);
b) Einsetzen der Glasplatte (11) in eine Spritzgießform;
c) Anspritzen von jeweils einer einzelnen Kunststoffleiste (12, 14) an zumindest einen Randbereich (2, 4) der Glasplatte (11) derart, dass sie nach dem Auskühlen unter Vorspannung an dem Randbereich (2, 4) festsitzt, **dadurch gekennzeichnet, dass** die zumindest eine Kunststoffleiste (12, 14) ca. 0,2 bis 2 mm kürzer ist als der Randbereich (2, 4), an den sie angespritzt ist.

11. Verfahren nach Anspruch 10, wobei jeweils eine Kunststoffleiste (12, 14) an zwei gegenüberliegende Randbereiche (2, 4) der Glasplatte (11) angespritzt wird.

12. Verfahren nach Anspruch 10 oder 11, wobei zwischen Schritt a) und b) jeweils die Kante/n des/der Randbereich/en (6, 8) geschliffen wird/werden, an den/die keine Kunststoffleiste angespritzt wird/werden.

## Claims

1. Domestic refrigeration appliance (1) with a door, by means of which access can be gained to an interior space into which at least one shelf (10) is inserted for placing items to be refrigerated, wherein the shelf (10) is made from a glass plate (11), wherein a single plastic strip (12, 14) is injection moulded onto each of one or more lateral edge regions (2, 4, 6, 8) of the glass plate (11) such that said shelf is firmly held at the respective edge region (2, 4, 6, 8) in a pre-stressed manner, **characterised in that** the at least one plastic strip (12, 14) is in the range of approximately 0.2 mm to 2 mm shorter than the edge region (2, 4) onto which said strip is injection moulded.

2. Domestic refrigeration appliance (1) according to claim 1, **characterised in that** a plastic strip (14) is injection moulded onto the edge region (2) of the glass plate (11) facing toward the door.

3. Domestic refrigeration appliance (1) according to claim 1 or 2, **characterised in that** a plastic strip (12) is injection moulded onto the rear edge region (4) of the glass plate (11) facing away from the door.

4. Domestic refrigeration appliance (1) according to one of the preceding claims, **characterised in that** the shelf (10) is held at two side walls (35, 36) of the interior space.

5. Domestic refrigeration appliance (1) according to one of claims 2 to 4, **characterised in that** a respective plastic strip (12, 14) is injection moulded onto the edge region (4) of the glass plate (11) facing away from the door and onto the edge region (2) of the glass plate (11) facing toward the door, and that the edge regions (6, 8) of the glass plate (11) facing toward the side walls (35, 36) are free from plastic strips.

6. Domestic refrigeration appliance (1) according to one of the preceding claims, **characterised in that** the at least one plastic strip (12, 14) overlaps the edge region onto which said strip is injection moulded by an amount in the range of approximately 5 mm to 20 mm, and preferably 10 mm to 15 mm.

7. Domestic refrigeration appliance (1) according to one of the preceding claims, **characterised in that** the at least one plastic strip (12, 14) is made from acrylonitrile butadiene styrene.

8. Domestic refrigeration appliance (1) according to one of the preceding claims, **characterised in that** the, or at least one of the plastic strips (12, 14) is made from a plastic material with a metallic appearance.

9. Shelf (10) for a domestic refrigeration appliance, made from a glass plate (11), wherein a single plastic strip (12, 14) is injection moulded onto each of one or more edge regions (2, 4) of the glass plate (11) such that said plate is firmly attached to the respective edge region (2, 4, 6, 8) in a pre-stressed manner, **characterised in that** the at least one plastic strip (12, 14) is in the range of approximately 0.2 mm to 2 mm shorter than the edge region (2, 4) onto which said strip is injection moulded.

10. Method for manufacturing a shelf (10) for a domestic refrigeration appliance (1), comprising the following steps:
a) provision of a glass plate (11);
b) placement of the glass plate (11) in an injection mould;
c) injection moulding of a single plastic strip (12, 14) respectively onto at least at one edge region (2, 4) of the glass plate (11) such that, following cooling, said plastic strip (12, 14) is firmly attached to the edge region (2, 4) in a pre-stressed manner, **characterised in that** the at least one plastic strip (12, 14) is in the range of approximately 0.2 mm to 2 mm shorter than the edge region (2, 4) onto which said strip is injection moulded.

11. Method according to claim 10, wherein a plastic strip (12, 14) is injection moulded onto each of two mutually opposing edge regions (2, 4) of the glass plate (11).

12. Method according to claim 10 or 11, wherein between steps a) and b), the edge(s) of the edge region(s) (6, 8) onto which no plastic strip is injection moulded is/are ground.

## Revendications

1. Appareil frigorifique (1) à usage domestique, comprenant une porte par l'intermédiaire de laquelle un espace intérieur est accessible, dans lequel au moins une clayette (10) est insérée pour le dépôt de produits à réfrigérer,
la clayette (10) étant fabriquée à partir d'une plaque de verre (11), respectivement une baguette plastique (12, 14) individuelle étant injectée sur une ou plusieurs parties de bord (2, 4, 6, 8) latérales de la plaque de verre (11) de manière à ce qu'elle soit bloquée sur la partie de bord respective (2, 4, 6, 8) sous précontrainte, **caractérisé en ce que** l'au moins une baguette plastique (12, 14) est d'environ 0,2 à 2 mm plus courte que la partie de bord (2, 4) sur laquelle elle est injectée.

2. Appareil frigorifique (1) à usage domestique selon la revendication 1, **caractérisé en ce qu'**une baguette plastique (14) est injectée sur la plaque de verre (11) sur la partie de bord (2) tournée vers la porte.

3. Appareil frigorifique (1) à usage domestique selon la revendication 1 ou 2, **caractérisé en ce qu'**une baguette plastique (12) est injectée sur la plaque de verre (11) sur la partie de bord (4) arrière détournée de la porte.

4. Appareil frigorifique (1) à usage domestique selon l'une quelconque des revendications précédentes, **caractérisé en ce que** la clayette (10) est maintenue sur deux parois latérales (35, 36) de l'espace intérieur.

5. Appareil frigorifique (1) à usage domestique selon l'une quelconque des revendications 2 à 4, **caractérisé en ce que** respectivement une baguette plastique (12, 14) individuelle est injectée sur la partie de bord (4) détournée de la porte et sur la partie de bord (2) tournée vers la porte de la plaque de verre (11), et **en ce que** les parties de bord (6, 8) de la plaque de verre (11), tournées vers les parois latérales (35, 36), sont exemptes de baguettes plastiques.

6. Appareil frigorifique (1) à usage domestique selon l'une quelconque des revendications précédentes, **caractérisé en ce que** l'au moins une baguette plastique (12, 14) recouvre la partie de bord sur laquelle elle est injectée, d'environ 5 à 20 mm, de préférence 10 à 15 mm.

7. Appareil frigorifique (1) à usage domestique selon l'une quelconque des revendications précédentes, **caractérisé en ce que** l'au moins une baguette plastique (12, 14) est en acrylonitrile butadiène styrène.

8. Appareil frigorifique (1) à usage domestique selon l'une quelconque des revendications précédentes, **caractérisé en ce que** les resp. au moins une des baguettes plastiques (12, 14) est constituée d'une matière plastique à optique métallique.

9. Clayette (10) pour un appareil frigorifique à usage domestique, laquelle est fabriquée à partir d'une plaque de verre (11), respectivement une baguette plastique (12, 14) individuelle étant injectée sur une ou plusieurs parties de bord (2, 4) de la plaque de verre (11) de manière à ce qu'elle soit bloquée sur la partie de bord respective (2, 4, 6, 8) sous précontrainte, **caractérisée en ce que** l'au moins une baguette plastique (12, 14) est d'environ 0,2 à 2 mm plus courte que la partie de bord (2, 4) sur laquelle elle est injectée.

10. Procédé de fabrication d'une clayette (10) pour un appareil frigorifique (1) à usage domestique, comprenant les étapes suivantes :
a) fourniture d'une plaque de verre (11) ;
b) insertion de la plaque de verre (11) dans un moule de moulage par injection ;
c) injection de respectivement une baguette plastique (12, 14) individuelle sur au moins une partie de bord (2, 4) de la plaque de verre (11) de manière à ce qu'après le refroidissement elle soit bloquée sur la partie de bord (2, 4) sous précontrainte, **caractérisé en ce que** l'au moins une baguette plastique (12, 14) est d'environ 0,2 à 2 mm plus courte que la partie de bord (2, 4) sur laquelle elle est injectée.

11. Procédé selon la revendication 10, respectivement une baguette plastique (12, 14) étant injectée sur deux parties de bord (2, 4) opposées de la plaque de verre (11).

12. Procédé selon la revendication 10 ou 11, dans lequel, entre les étapes a) et b), respectivement l'arête/les arêtes de la partie de bord /des parties de bord (6, 8) est/sont polie/s, sur laquelle/lesquelles aucune baguette plastique n'est injectée.
